# EUROPÄISCHE PATENTANMELDUNG

(11) **EP 4 819 435 A1**
(43) Veröffentlichungstag der Anmeldung: **07.10.2026**
(21) Anmeldenummer: 25167488.3
(22) Anmeldetag: 31.03.2025
(51) Int. Cl.: H02J 7/00, H01M 10/44

(54) **ENTLADEN MINDESTENS EINER BATTERIE MITTELS EINER ENTLADEVORRICHTUNG, WOBEI DIE ENTLADEVORRICHTUNG MEHRERE SERIELL ANGEORDNETE BATTERIE-ANSCHLUSSPLÄTZE AUFWEIST**

(71) Anmelder: Siemens Aktiengesellschaft, 80333 München (DE)
(72) Erfinder: Arzberger, Arno, 96135 Stegaurach (DE); Bellut, Lukas, 97737 Gemünden am Main (DE); Berlt, Patricia, 99310 Arnstadt (DE); Budday, Dominik, 91056 Erlangen (DE); Heise, Simon, 96047 Bamberg (DE); Leinmüller, Daniel, 80687 München (DE); Petz, Julian, 91466 Gerhardshofen (DE); Schmid, Arthur, 80337 München (DE)
(74) Vertreter: Siemens Patent Attorneys

(57) **Zusammenfassung**

Die Erfindung betrifft ein Verfahren zum Entladen mindestens einer Batterie mittels einer Entladevorrichtung, wobei die Entladevorrichtung mehrere seriell angeordnete Batterie-Anschlussplätze aufweist sowie die Entladevorrichtung.

## Beschreibung

Die Erfindung betrifft ein Verfahren zum Entladen mindestens einer Batterie mittels einer Entladevorrichtung, wobei die Entladevorrichtung mehrere seriell angeordnete Batterie-Anschlussplätze aufweist sowie die Entladevorrichtung.

Angesichts des zunehmenden Einsatzes von Batterien in elektrischen Geräten und Elektrofahrzeugen gewinnt deren sicheres und effizientes Recycling zunehmend an Bedeutung. Ein wesentlicher Schritt im Recyclingprozess ist die vollständige Entladung der Batterien, da dies eine Vielzahl sicherheitsrelevanter Gefahren minimiert, darunter Brandrisiken, gefährliche Berührspannungen, Störlichtbögen, Freisetzung toxischer Gase und Verbrennungen durch Überhitzung.

Durch das vollständige Entladen wird die Brandgefahr reduziert. Ein interner oder externer Kurzschluss einer geladenen Batterie kann ausreichend Wärme freisetzen, um die Batterie selbst (thermal runaway) oder angrenzende brennbare Materialien zu entzünden. Auch gefährliche Berührspannungen sind zu vermeiden. In der Branche Elektromobilität gilt eine Spannung von >60 V DC bereits als "Hochvoltbereich". Ab dieser Spannung dürfen Reparatur-, Prüf- und Instandsetzungsarbeiten an Antriebskomponenten nur von fachkundigen Personen für Arbeiten an Hochvoltsystemen oder von fachkundig unterwiesenen Personen unter Aufsicht und Leitung einer fachkundigen Person für Arbeiten an Hochvoltsystemen durchgeführt werden (vgl. DGUV Regel 109- 009: Fahrzeuginstandhaltung, Abschnitt 7.2). Ein interner oder externer Kurzschluss einer geladenen Batterie kann thermisch bedingt zudem zu einem so großen Anstieg des Innendrucks in den Batteriezellen führen, dass heiße Elektrolytdämpfe oder Verbrennungsgase mit hoher Geschwindigkeit austreten. Die Dämpfe oder Gase können akut toxisch und/oder kanzerogen sein. Zudem sind Verbrennungen zu vermeiden: Die Oberflächen von nicht entladenen Batterien können sich im Fall von internen oder externen Kurzschlüssen so hoch erhitzen, dass bei Berührung Verbrennungen der Haut möglich sind.

Störlichtbögen können im Zusammenhang mit zu recycelnden und noch nicht entladenen Batterien insbesondere durch Kurzschluss der Batteriepole oder bei Isolationsfehlern auftreten und sind somit ebenfalls zu vermeiden. Batterien können Störlichtbögen mit enorm hoher Leistung freisetzen. Sie können Verbrennungen, Gehörschäden, das Einatmen gefährlicher Metalldämpfe und das Verblitzen der Augen verursachen.

Es sind passive Entlademethoden bekannt, wie das Anklemmen eines elektrischen Widerstands oder das Tauchen der Batterie in eine elektrisch leitfähige Flüssigkeit. Die passiven Entlademethoden sind aufgrund ihrer eingeschränkten Steuerbarkeit und der fehlenden Nutzbarkeit der elektrischen Energie oft weniger geeignet für industrielle Anwendungen.

Aktive Entlademethoden hingegen ermöglichen eine Steuerung des Entladeprozesses und die Weiterverwendung der umgesetzten elektrischen Energie, beispielsweise zur Einspeisung in das öffentliche Stromnetz oder zur lokalen Speicherung.

In der europäischen Patentschrift EP 4 179 605 B1 wird eine Vorrichtung und ein Verfahren beschrieben, mit denen entladene Batterien aus einer Serienschaltung entnommen und neue zu entladende Batterien in diese aufgenommen werden können.

Vor diesem Hintergrund ist es eine Aufgabe der vorliegenden Erfindung, eine sichere und effiziente Entladung von Batterien, insbesondere in einer Serienschaltung, zu ermöglichen.

Elektrische Sicherheitsrisiken, insbesondere gefährliche Berührspannungen und Kurzschlussrisiken, sollen minimiert werden und gleichzeitig die Prozessstabilität und Effizienz erhöht werden. Diese Aufgabe wird durch die Merkmale der unabhängigen Ansprüche gelöst. Vorteilhafte Ausgestaltungen sind in den abhängigen Ansprüchen angegeben.

Unabhängig vom grammatikalischen Geschlecht eines bestimmten Begriffes sind Personen mit männlicher, weiblicher oder anderer Geschlechteridentität mit umfasst.

Die Erfindung betrifft ein Verfahren zum Entladen mindestens einer Batterie mittels einer Entladevorrichtung, wobei die Entladevorrichtung mehrere seriell angeordnete Batterie-Anschlussplätze aufweist, aufweisend die folgenden Schritte:
- Anschließen der Batterie an einen freien Batterie-Anschlussplatz, wobei der freie Batterie-Anschlussplatz mittels eines geöffneten Schalters und eines Wechselschalters in einer ersten Stellung allpolig von einem Entladeschaltkreis der Entladevorrichtung getrennt ist;
- Herunterfahren eines Stroms im Entladeschaltkreis;
- Schalten des Wechselschalters in eine zweite Stellung, so dass anstatt einer Verbindung in der Entladevorrichtung parallel an dem Batterie-Anschlussplatz vorbei eine Verbindung von und/ oder zu einem ersten Pol des Batterie-Anschlussplatzes stromführbar wird;
- Schließen des Schalters, sodass eine Verbindung in der Entladevorrichtung von und/ oder zu einem zweiten Pol des Batterie-Anschlussplatzes stromführbar wird;
- Entladen der angeschlossenen Batterie mittels eines von einer Steuerung der Entladevorrichtung Entladestroms;
- Herunterfahren des Stroms im Entladeschaltkreis;
- Öffnen des Schalters;
- Schalten des Wechselschalters in die erste Stellung, so dass anstatt der Verbindung von und/ oder zu dem ersten Pol des Batterie-Anschlussplatzes die Verbindung in der Entladevorrichtung parallel an dem Batterie-Anschlussplatz vorbei stromführbar wird;
- Bereitstellen der entladenen Batterie.

Die Entladevorrichtung mit den mehreren seriell angeordneten Batterie-Anschlussplätzen bietet die Möglichkeit der seriellen Verschaltung von Batterien während der aktiven Entladung. Insbesondere für Recyclingbetriebe, die eine Vielzahl von Batterietypen mit variierenden Spannungen und Kapazitäten verarbeiten, wird eine elektrische Leistungselektronik, die für die Entladung bereitgestellt werden muss, somit optimal ausgenutzt.

Das Einsetzen einer zu entladenden Batterie in einen freien Batterie-Anschlussplatz erfolgt, während der Abschnitt des Schaltkreises mit dem Batterie-Anschlussplatz, den entsprechenden Steckverbindungen und insbesondere weiteren Komponenten wie Spannungsmessgerät etc., allpolig von einem Entladeschaltkreis der Entladevorrichtung getrennt sind. So sind beliebig viele weitere Batterien, die in anderen Batterie-Anschlussplätzen eingesetzt sind, flexibel entladbar, während eine zu entladende Batterie in den freien, allpolig getrennten Anschlussplatz, eingesetzt wird. Auch ein Freibleiben eines Batterie-Anschlussplatzes ist ohne Rückwirkung auf einen Entladevorgang anderer Batterien vorteilhaft möglich.

Nun kann der Entladevorgang mit der eingesetzten zu entladenden Batterie erfolgen. Dafür wird der Entladestrom im Entladeschaltkreis zumindest kurzfristig heruntergefahren, beispielsweise auf einen Zielwert von annähernd null Ampère. Dann erfolgt ein Schalten des Wechselschalters in eine zweite Stellung, so dass anstatt einer Verbindung in der Entladevorrichtung parallel an dem Batterie-Anschlussplatz vorbei eine Verbindung von und/ oder zu einem ersten Pol des Batterie-Anschlussplatzes stromführbar wird.

Ebenso wird der Schalter geschlossen, sodass eine Verbindung in der Entladevorrichtung von und/ oder zu einem zweiten Pol des Batterie-Anschlussplatzes stromführbar wird.

Der Batterie-Anschlussplatz wird dann Teil des Entladestromkreises. Der Teil des Schaltkreises mit dem Batterie-Anschlussplatz sowie dem Wechselschalter, dem Schalter und dem Kurzschlussschalter wird auch als Sub-Channel bezeichnet. Der Sub-Channel wird durch das Schließen des Schalters und das Schalten des Wechselschalters in die zweite Stellung in den Entladeschaltkreis "hineingeschaltet". Statt einer Verbindung in der Entladevorrichtung parallel an dem Batterie-Anschlussplatz vorbei, die auch als Batterie-Anschluss-Bypass bezeichnet werden kann, sind dann die Verbindungen hin zum Batterie-Anschlussplatz stromführbar.

Stromführbar heißt insbesondere stromführend, sobald eine Spannungsversorgung angeschlossen ist oder sobald Spannung angelegt wird. Es folgt nun das Entladen der angeschlossenen Batterie mittels eines Entladestroms. Insbesondere wird ein Entladestrom von der Steuerung der Entladevorrichtung vorgegeben. Somit fließt der Entladestrom durch den Sub-Channel. Dafür wird insbesondere der Strom im Entladeschaltkreis hochgefahren, was insbesondere auch eine Berücksichtigung einer an der eingesetzten Batterie gemessenen Spannung umfasst. Beispielsweise bleibt der Sub-Channel so lange Teil des Entladestromkreises, bis ein bestimmter Grenzwert als Untergrenze für die Restspannung in der Batterie erreicht ist. Dann wird beispielsweise ein Signal an die Steuerung gegeben, dass der Sub-Channel, in dem die verbleibende Rest-Spannung den Grenzwert unterschritten hat, aus dem Entladestromkreis "herausgeschaltet" werden soll.

Beispielsweise wird die in der Batterie befindliche Restspannung gemessen und mit einem von der Steuerung als Sollwert vorgegebenen Entladestromwert entladen. Beispielsweise wird eine Zielspannung vorgegeben und beispielsweise unter Berücksichtigung der Begrenzungen durch die Elektronik und/oder einer Temperaturüberwachung entladen. Dafür wird beispielsweise die Temperatur einer jeweiligen Batterie je Sub-Channel gemessen und überwacht.

Der Grenzwert für die Batteriespannung ist insbesondere null Volt oder annähernd null Volt. Der Grenzwert ist in Varianten negativ, so dass eine Deaktivierung der Batterie herbeiführbar ist.

Für das Herausschalten wird der Entladestrom heruntergefahren. Dann wird der Schalter hin zum zweiten Pol geöffnet, sodass die Batterie aus dem Entladeschaltkreis entfernt ist. Der Wechselschalter wird wieder in die erste Stellung gebracht, so dass anstatt der Verbindung von und/ oder zu dem ersten Pol des Batterie-Anschlussplatzes die Verbindung in der Entladevorrichtung parallel an dem Batterie-Anschlussplatz vorbei stromführbar wird und somit der Batterie-Anschluss-Bypass stromführend ist, sobald der Entladestrom wieder hochgefahren wird. Die Batterie ist jetzt allpolig getrennt.

Nun wird die vollständig entladene Batterie bereitgestellt. Insbesondere wird sie nun entnommen. Vorteilhafterweise wird eine flexible Rückwirkungsfreiheit auf den Entladeprozess der verbleibenden Batterien im Serienverbund beim Herausnehmen einer entladenen Batterie und beim Einsetzen einer neuen zu entladenden Batterie gewährleistet. Entladene Batterien können überdies unabhängig vom laufenden Prozess sicher kurzgeschlossen werden.

Durch die Nutzung einer aktiven Entlademethode werden Batterien vorteilhaft flexibel einzeln oder seriell verschaltet über eine geeignete Leistungselektronik, beispielsweise eine elektronisch gesteuerte Last, entladen. Vorteilhafterweise wird umgesetzte elektrische Energie weiterverwendet, beispielsweise lokal gespeichert oder in das öffentliche Stromnetz zurückgespeist. Um eine aktive Entladung wirtschaftlich betreiben zu können, wird die elektrische Auslegung der Leistungselektronik, maßgeblich gekennzeichnet durch zulässige Strom- und Spannungsbereiche, an die zu recycelnden Batterien angepasst.

Für einen Recyclingbetrieb, in dem eine große Vielfalt an Batterietypen mit unterschiedlichsten Spannungslagen verarbeitet wird, können vorteilhafterweise mehrere Batterien seriell verschaltet werden und gleichzeitig an einer Leistungselektronik, einem sogenannten Kanal, entladen werden. Durch die serielle Schaltung addieren sich die Spannungen der einzelnen Batterien, wodurch die vorzuhaltende Anzahl an Kanälen durch die optimale Ausnutzung der maximalen Spannung der Leistungselektronik minimiert werden kann.

Gemäß einer Ausgestaltung weist das Verfahren ferner den Schritt des Hochfahrens des Stroms im Entladeschaltkreis auf einen Entladestromwert nach einem Schalten des Wechselschalters in die erste Stellung auf. Insbesondere wird der Strom zu dem Zeitpunkt hochgefahren nachdem der Wechselschalter in der ersten Stellung ist, da ab dann der Entladestrom durch den Sub-Channel-Stromkreis zum Entladen der Batterie geleitet werden soll.

Gemäß einer Ausgestaltung erfolgt ferner das Schließen eines Kurzschlussschalters, so dass ein Kurzschlussstromkreis des Batterie-Anschlussplatzes einen Kurzschluss von Batteriekontakten der angeschlossenen Batterie herstellt. Zudem wird also nun ein Kurzschlussschalter geschlossen, der innerhalb des Sub-Channels vorgesehen ist und der einen Kurzschluss von Batteriekontakten der angeschlossenen Batterie herstellt. Die Batterie ist nun kurzgeschlossen, der Kurzschlussstromkreis wird innerhalb des Sub-Channels und nachdem die Batterie allpolig getrennt wurde, gebildet.

Vorteilhaft werden Prozessstörungen und eine Beeinträchtigung der Systemsicherheit durch das Kurzschließen der Batterie im Betrieb vermieden, da das Kurzschließen unabhängig vom Entladestromkreis, nachdem ein Sub-Channel von diesem getrennt wurde, erfolgt.

Zusätzlich wird beispielsweise nach dem Kurzschließen mittels des Kurzschlussschalters extern ein Kurzschlussdraht angebracht, der dann auch außerhalb der Anlage einen dauerhaften Kurzschluss sicherstellt.

Gemäß einer Ausgestaltung wird die Batterie deaktiviert. Der Grenzwert für die Batteriespannung ist dann negativ, so dass eine Deaktivierung der Batterie herbeiführbar ist. Der sogenannte Pole Swap und das weitere Entladen in negative Spannungsbereiche führt zu einem internen Kurzschluss der Batterie. Im Anschluss erfolgt das allpolige Trennen des Batterie-Anschlussplatzes. Vorteilhaft werden für die Entnahme gefährliche Berührspannungen vermieden, da während des Austauschs einer Batterie an keinem der Pole eine gefährliche Berührspannung anliegt.

Ein vorhandener Kurzschlussschalter nach vorstehend beschriebener Art kann zusätzlich zur Deaktivierung betätigt werden.

Gemäß einer Ausgestaltung wird die bereitgestellte Batterie entnommen. Beispielsweise wird die Entnahme quittiert. Beispielsweise zeigen LEDs am Batterie-Anschlussplatz an, wenn eine Entnahme der Batterie gefahrlos möglich ist, insbesondere wenn die Entladung durchgeführt wurde und eine Spannungsgrenzwert unterschritten wurde und zudem der Kurzschlussschalter geschlossen wurde.

Gemäß einer Ausgestaltung wird nach Entnahme der Batterie der Kurzschlussschalter geöffnet und insbesondere das Verfahren erneut mit den obigen Schritten ausgeführt. In diesem Zustand ist der Batterie-Anschlussplatz nicht Bestandteil des stromdurchflossenen Entladestromkreises und ein Kurzschluss einer einzusetzenden Batterie wird verhindert, indem der Kurzschlussschalter davor geöffnet wurde.

Gemäß einer Ausgestaltung werden das Schalten des Wechselschalters in die zweite Stellung und das Schließen des Schalters gleichzeitig durchgeführt. Das "Hineinschalten" des Sub-Channels in den Entladestromkreis ist mittels des Wechselschalters und des Schalters insbesondere bei gleichzeitiger Schaltung möglich.

Gemäß einer Ausgestaltung werden das Öffnen des Schalters und das Schalten des Wechselschalters in die erste Stellung zeitlich hintereinander durchgeführt. Das "Herausschalten" aus dem Entladestromkreis erfolgt insbesondere, wenn die Batterie ausreichend entladen ist. Durch das Öffnen des Schalters ist die Batterie bereits aus dem Entladestromkreis entfernt, durch das Schalten des Wechselschalters in die erste Stellung ist die Batterie dann allpolig getrennt.

Gemäß einer Ausgestaltung werden die Spannung der zu entladenden Batterie nach dem Anschließen der Batterie mittels eines Spannungsmessgerätes gemessen und die weiteren Schritte abhängig von der gemessenen Spannung durchgeführt. Beispielsweise wird eine an dem Batterie-Anschlussplatz eingesetzte Batterie kontinuierlich vermessen zur Ermittlung einer Restspannung im laufenden Betrieb. Beispielsweise werden alle weiteren Schritte nach dem Anschließen und der Spannungsmessung nur durchgeführt, wenn ein Grenzwert an Restspannung der eingesetzten Batterie nicht unterschritten wird. Andernfalls deuten beispielsweise die LEDs wiederum an, dass die Batterie bereits ausreichend entladen ist und der Sub-Channel wird nicht zu dem Entladestromkreis dazugeschaltet. Wird jedoch der Grenzwert nicht unterschritten, erfolgt das Herunterfahren des Stroms für das anschließende "Hineinschalten" des Sub-Channels.

Insbesondere erfolgt auch während des Entladens weiterhin das Messen der Spannung, so dass der Entladevorgang je Sub-Channel beendet werden kann, sobald die Restspannung in der Batterie ausreichend gering ist. Für Varianten mit Pole-Swap und negativer Entladung wird ein negativer Grenzwert verwendet, bis zu dem die Batterie negativ entladen wird. Anhand der Spannungsmessung wird beobachtet, wann der interne Kurzschluss herbeigeführt wurde, um dann die Batterie Herausschalten zu können.

Gemäß einer Ausgestaltung werden die Temperatur der zu entladenden Batterie nach dem Anschließen der Batterie mittels eines Temperaturmessgerätes gemessen und die weiteren Schritte abhängig von der gemessenen Temperatur durchgeführt. Insbesondere wird die Temperatur bei einer Deaktivierung kontinuierlich gemessen und eine Deaktivierung insbesondere unterbrochen, wenn ein zu hoher Temperaturanstieg erkannt wird. Es wird dann beispielsweise zunächst die Batterie oder Batterieumgebung gekühlt und der Deaktivierungs-Prozess erneut gestartet.

Die Erfindung betrifft ferner eine Entladevorrichtung mit mehreren seriell angeordneten Batterie-Anschlussplätzen für die Entladung mindestens einer Batterie, insbesondere für die Entladung mehrerer Batterien gleichzeitig, aufweisend eine Steuerung sowie je Batterie-Anschlussplatz einen Schalter, einen Wechselschalter und einen Kurzschlussschalter, die Entladevorrichtung ausgebildet und eingerichtet zur Durchführung des Verfahrens gemäß einem der obigen Ausführungen. Beispielsweise sind bis zu zehn Batterie-Anschlussplätze vorgesehen je einer Steuerung der Entladevorrichtung.

Gemäß einer Ausgestaltung weist die Entladevorrichtung ferner ein Spannungsmessgerät je Batterie-Anschlussplatz auf.

Gemäß einer Ausgestaltung weist die Entladevorrichtung ferner ein Temperaturmessgerät je Batterie-Anschlussplatz auf.

Die Erfindung betrifft ferner eine Entladevorrichtung mit mehreren seriell angeordneten Batterie-Anschlussplätzen für die Entladung mindestens einer Batterie, insbesondere für die Entladung mehrerer Batterien gleichzeitig, wobei je Batterie-Anschlussplatz eine Schalteranordnung zum allpoligen Verbinden und/ oder Trennen einer eingesetzten Batterie vorgesehen ist. Durch das allpolige Trennen des Batterie-Anschlussplatzes vom Entladestromkreis wird ein gefahrloses Herausnehmen der Batterie aus dem Anschlussplatz ermöglicht.

Gemäß einer Ausgestaltung weist die Entladevorrichtung ferner einen Kurzschlussschalter je Batterie-Anschlussplatz zum Kurzschließen einer eingesetzten entladenen und allpolig getrennten Batterie auf. Durch den Kurzschluss der Batterie nach einem Entladen unter eine vorgebbare Restspannung unabhängig von einem Entladestromkreis und den darin befindlichen anderen Sub-Channels, in separatem Kurzschlusskreis, erfolgt das Kurzschließen rückwirkungsfrei auf den ggf. noch laufenden Entladevorgang und ermöglicht das gefahrlose Herausnehmen der Batterie aus dem Anschlussplatz.

Die Erfindung wird nachfolgend anhand von Ausführungsbeispielen mit Hilfe der Figuren näher erläutert. Es zeigen:
Figur 1 eine schematische Darstellung zur Veranschaulichung einer Entladevorrichtung gemäß einem Ausführungsbeispiel;
Figur 2 eine schematische Darstellung eines Ausschnitts der Entladevorrichtung gemäß dem Ausführungsbeispiel.

In den Figuren sind funktionsgleiche Elemente mit denselben Bezugszeichen versehen, sofern nichts anderes angegeben ist.

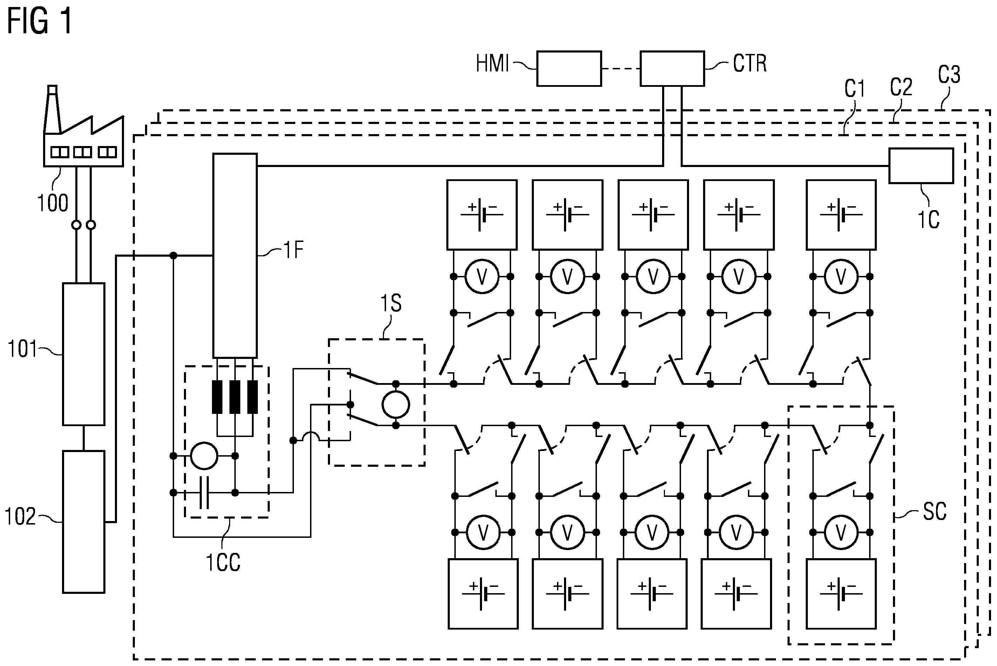

In Figur 1 ist ein vereinfachtes Schaltbild einer Entladevorrichtung gezeigt, wie sie gemäß einem Ausführungsbeispiel der Erfindung vorgesehen ist. Die Entladevorrichtung umfasst drei sogenannte Kanäle C1, C2, C3 zum Entladen jeweils mehrerer Batterien und ist beispielsweise über eine intelligente Stromverteilungseinheit 102 und einen Transformator 101 an ein Fabriknetz 100 angeschlossen. Gemäß dem Ausführungsbeispiel ist die Entladevorrichtung zur Vorbereitung des Recyclings von Batterien vorgesehen und in eine Automatisierungsanlage zum Zerlegen für Batterien räumlich integriert, sodass das Fabriknetz 100 vorteilhaft genutzt wird zum Einspeisen der Energie, die den Batterien entnommen wird. Die Batterien kommen mit unbekannter und zunächst unbestimmter Restkapazität in der Recyclinganlage an und werden beispielsweise nach einer Sortierung nach Batterietypen und/ oder Anschlussarten zunächst in der Entladevorrichtung entladen.

Beispielsweise werden zu recycelnde Batterien in der Entladevorrichtung entladen und entnommen, sobald eine vollständige Entladung angezeigt wird, beispielsweise durch LEDs oder vergleichbare Markierungen an den Batterie-Anschlussplätzen, oder mittels eines HMIs einer Steuerung, das die Kanäle mit den zugehörigen Batterie-Anschlussplätzen visualisiert. Im realen Betrieb werden die Batterien praktisch niemals gleichzeitig den vollständig entladenen Zustand erreichen. Das liegt daran, dass in der Serienschaltung alle Batterien von einem einheitlichen Strom durchflossen werden, die zu entladende Kapazität jedoch nicht einheitlich ist. Gründe für eine abweichende Kapazität finden sich beispielsweise in unterschiedlichen initialen Ladezuständen (state of charge - SOC), unterschiedlichen nominellen Kapazitäten, unterschiedlichen Alterungszuständen, etc.

Beispielsweise sind im Kanal C1 zehn sogenannte Sub-Channels SC vorgesehen, von denen in Figur 1 einer zur Veranschaulichung markiert ist. Über eine Hauptschaltungseinheit 1S wird der Kanal C1 insgesamt geschalten, so dass er einerseits zur Entladung von in die Sub-Channels SC eingesetzten Batterien dient und andererseits zugleich zur Einspeisung von Energie in das Fabriknetz 100. Die Ansteuerung erfolgt über eine Steuerungseinheit CTR, die beispielsweise entsprechende Signale mit Sollwerten je Kanal C1 bereitstellt. Über eine Netzfilterkomponente 1CC mit Spulen und Kondensatoren und einen Spannungswandler 1F wird die Einspeisung in das Fabriknetz 100 vorbereitet.

Beispielsweise sind alle vorgesehenen Kanäle C1, C2, C3 analog zueinander aufgebaut und verfügen über eine jeweilige Steuerungseinheit. In Varianten ist eine übergeordnete Steuerungseinheit für die Ansteuerung aller Kanäle vorgesehen. Beispielsweise kommt eine PLC zum Einsatz und es ist ein Human-Machine-Interface HMI vorgesehen als Schnittstelle für Bedienpersonal.

Beispielsweise ist zudem je Kanal C1 eine Kühlungskomponente 1C verbaut, die zu hohe Temperaturen je Kanal C1 erkennt und - angesteuert durch die Steuerungseinheit CTR - durch Luftkühlung entgegenwirkt.

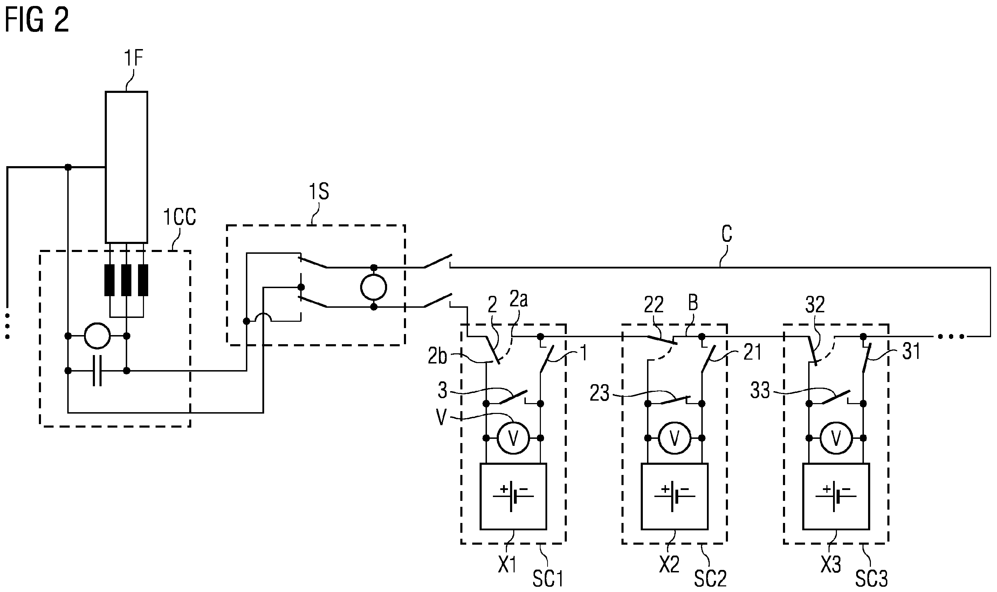

Anhand von Figur 2 wird die Funktionsweise der Entladung je Sub-Channel SC1, SC2, SC3 erläutert. Im Sub-Channel SC1 sind exemplarisch die relevanten Schaltkomponenten gezeigt, die ein allpoliges Trennen des Batterie-Anschlussplatzes X1 ermöglichen und ferner einen Kurzschluss der eingesetzten Batterie nach dem Entladen außerhalb eines Entladestromkreises C für die übrigen Sub-Channels ermöglichen. Es ist ein Schalter 1 vorgesehen, bei dessen Öffnung der Batterie-Anschlussplatz X1 nicht mehr Bestandteil des Entladestromkreises ist, d.h. der geregelte Entladevorgang unterbrochen ist. Durch Schalten eines Wechselschalter 2 von einer zweiten Stellung 2b in eine erste Stellung 2a ist der Batterie-Anschlussplatz X1 allpolig vom Entladestromkreis C getrennt. Ein Kurzschlussschalter 3 ist zudem je Sub-Channel vorgesehen und bewirkt ein Kurzschließen der Batterie-Pole einer eingesetzten Batterie.

Mit Hilfe der Sub-Channels SC2 und SC3 wird erläutert, wie die Schaltkomponenten zusammenwirken. Der Wechselschalter 22 befindet sich in einer ersten Stellung und der Schalter 21 ist geöffnet. Damit ist der Batterie-Anschlussplatz X2 - unabhängig davon, ob eine Batterie eingesetzt ist oder nicht - nicht an der Entladung beteiligt. Die Verbindung B an dem Batterie-Anschlussplatz vorbei kann als Bypass angesehen werden, die den gesamten Sub-Channel SC2 von der über die Steuerung durchgeführten Entladung ausnimmt.

In dieser Schalterstellung im Sub-Channel SC2 wird vorzugsweise zudem der Kurzschlussschalter 23 geschlossen, nachdem eine Batterie entladen wurde und während der Entnahme der entladenen Batterie. Somit wird verhindert, dass Restspannungen in der Batterie bestehen, die beim Entnehmen eine Gefahr für Bedienpersonal darstellen. Vor dem Einsetzen der nächsten zu entladenden Batterie wird der Kurzschlussschalter wieder geöffnet.

Die Batterien werden mit der vorgeschlagenen Entladevorrichtung flexibel und unabhängig von der Entladung weiterer Batterien im gleichen Kanal oder in anderen Kanälen entladen. Ist ein gewünschter Zustand einer Batterie erreicht, beispielsweise 0 % SOC oder 0 Volt, wird die Batterie entnommen. Um eine minimal zugelassene Spannung der Leistungselektronik nicht zu unterschreiten kann es außerdem erforderlich sein, die Entnahme der beteiligten Batterien in einem Kanal im Zusammenspiel zu überwachen und beispielsweise weitere zu recycelnde Batterien zur Anhebung der Gesamtspannung in die Serienschaltung gezielt neu aufzunehmen.

Die Schalterstellung im Sub-Channel SC3 bewirkt, dass eine in diesem Sub-Channel SC3 befindliche Batterie entladen wird. Dazu ist der Schalter 31 geschlossen und der Wechselschalter 32 in der zweiten Stellung, so dass in diesem Sub-Channel SC3 nicht der Bypass genutzt wird, sondern der Entladestromkreis C den Batterie-Anschlussplatz X3 umfasst.

Die vorgeschlagene Schaltung erhöht zusammen mit dem beschriebenen Verfahren die elektrische Sicherheit der Anlage. Durch den Einsatz des Schalters 1 und des Wechselschalters 2 zur allpoligen Trennung wird im Vergleich zum Stand der Technik die Gefahr eines ungeplanten Batteriekurzschlusses maßgeblich verringert. Zudem kann ein Kurzschalten der Batterie vollständig unabhängig vom Prozess umgesetzt werden, beispielsweise nachdem die Batterie zunächst vollständig auf 0V entladen wurde und dann aus dem Serienverbund entfernt wurde. Es besteht dadurch vollständige Rückwirkungsfreiheit auf die im Serienverbund verbliebenen Batterien. Die Kombination aus allpoliger Trennung und Kurzschluss ermöglicht dem Betreiber in diesem Zustand bei Bedarf auch das gefahrlose Anbringen einer externen Kurzschlussbrücke zur Verhinderung einer Relaxationsspannung in der Batterie, ohne dass der Entladeprozess für die anderen im Serienverbund befindlichen Batterien unterbrochen werden muss.

## Patentansprüche

1. Verfahren zum Entladen mindestens einer Batterie mittels einer Entladevorrichtung, wobei die Entladevorrichtung mehrere seriell angeordnete Batterie-Anschlussplätze (X1, ...) aufweist, aufweisend die folgenden Schritte:
- Anschließen der Batterie an einen freien Batterie-Anschlussplatz (X1, ...), wobei der freie Batterie-Anschlussplatz (X1, ...) mittels eines geöffneten Schalters (1) und eines Wechselschalters (2) in einer ersten Stellung (2a) allpolig von einem Entladeschaltkreis (C) der Entladevorrichtung getrennt ist;
- Herunterfahren eines Stroms im Entladeschaltkreis (C);
- Schalten des Wechselschalters (2) in eine zweite Stellung (2b), so dass anstatt einer Verbindung (B) in der Entladevorrichtung parallel an dem Batterie-Anschlussplatz (X1, ...) vorbei eine Verbindung von und/ oder zu einem ersten Pol des Batterie-Anschlussplatzes (X1, ...) stromführbar wird;
- Schließen des Schalters (1), sodass eine Verbindung in der Entladevorrichtung von und/ oder zu einem zweiten Pol des Batterie-Anschlussplatzes (X1, ...) stromführbar wird;
- Entladen der angeschlossenen Batterie mittels eines von einer Steuerung (CTR) der Entladevorrichtung Entladestroms;
- Herunterfahren des Stroms im Entladeschaltkreis (C);
- Öffnen des Schalters (1);
- Schalten des Wechselschalters (2) in die erste Stellung (2a), so dass anstatt der Verbindung (B) von und/ oder zu dem ersten Pol des Batterie-Anschlussplatzes (X1, ...) die Verbindung in der Entladevorrichtung parallel an dem Batterie-Anschlussplatz (X1, ...) vorbei stromführbar wird;
- Bereitstellen der entladenen Batterie.

2. Verfahren nach Anspruch 1, ferner aufweisend den Schritt:
- Hochfahren des Stroms im Entladeschaltkreis (C) auf einen Entladestromwert nach einem Schalten des Wechselschalters (2) in die erste Stellung.

3. Verfahren nach Anspruch 1 oder 2, ferner aufweisend den Schritt:
Schließen eines Kurzschlussschalters (3), so dass ein Kurzschlussstromkreis des Batterie-Anschlussplatzes (X1, ...) einen Kurzschluss von Batteriekontakten der angeschlossenen Batterie herstellt.

4. Verfahren nach einem der vorstehenden Ansprüche, ferner aufweisend den Schritt:
- Durchführen einer Deaktivierung der Batterie.

5. Verfahren nach einem der vorstehenden Ansprüche, wobei die bereitgestellte Batterie entnommen wird.

6. Verfahren nach einem der Ansprüche 3 bis 5, wobei nach Entnahme der Batterie der Kurzschlussschalter (3) geöffnet wird und insbesondere das Verfahren erneut mit den obigen Schritten ausgeführt wird.

7. Verfahren nach einem der vorstehenden Ansprüche, wobei das Schalten des Wechselschalters (2) in die zweite Stellung und das Schließen des Schalters (1) gleichzeitig durchgeführt werden.

8. Verfahren nach einem der vorstehenden Ansprüche, wobei das Öffnen des Schalters (1) und das Schalten des Wechselschalters (2) in die erste Stellung zeitlich hintereinander durchgeführt werden.

9. Verfahren nach einem der vorstehenden Ansprüche, wobei eine Spannung der zu entladenden Batterie nach dem Anschließen der Batterie mittels eines Spannungsmessgerätes (V) gemessen wird und die weiteren Schritte abhängig von der gemessenen Spannung durchgeführt werden.

10. Verfahren nach einem der vorstehenden Ansprüche, wobei eine Temperatur der zu entladenden Batterie nach dem Anschließen der Batterie mittels eines Temperaturmessgerätes gemessen wird und die weiteren Schritte abhängig von der gemessenen Temperatur durchgeführt werden.

11. Entladevorrichtung mit mehreren seriell angeordneten Batterie-Anschlussplätzen (X1, ...) für die Entladung mindestens einer Batterie, insbesondere für die Entladung mehrerer Batterien gleichzeitig, aufweisend eine Steuerung sowie je Batterie-Anschlussplatz einen Schalter (1), einen Wechselschalter (2) und einen Kurzschlussschalter (3), die Entladevorrichtung ausgebildet und eingerichtet zur Durchführung des Verfahrens gemäß einem der Ansprüche 1 bis 10.

12. Entladevorrichtung nach Anspruch 11, ferner aufweisend ein Spannungsmessgerät (V) je Batterie-Anschlussplatz (X1, ...).

13. Entladevorrichtung nach Anspruch 12, ferner aufweisend ein Temperaturmessgerät (V) je Batterie-Anschlussplatz (X1, ...).

14. Entladevorrichtung mit mehreren seriell angeordneten Batterie-Anschlussplätzen (X1, ...) für die Entladung mindestens einer Batterie, insbesondere für die Entladung mehrerer Batterien gleichzeitig, wobei je Batterie-Anschlussplatz (X1, ...) eine Schalteranordnung zum allpoligen Verbinden und/ oder Trennen einer eingesetzten Batterie vorgesehen ist.

15. Entladevorrichtung nach Anspruch 14, ferner aufweisend einen Kurzschlussschalter (3) je Batterie-Anschlussplatz (X1, ...) zum Kurzschließen einer eingesetzten entladenen und allpolig getrennten Batterie.
